# EUROPEAN PATENT SPECIFICATION

(11) **EP 4 534 345 B1**
(45) Date of publication and mention of the grant of the patent: **24.12.2025**
(21) Application number: 23849196.3
(22) Date of filing: 17.07.2023
(51) Int. Cl.: B60N 2/06, B60N 2/07

(54) **HORIZONTAL ADJUSTMENT MECHANISM FOR SLIDE RAIL AND AUTOMOBILE SEAT FRONT ELECTRIC SLIDE RAIL**
HORIZONTALER VERSTELLMECHANISMUS FÜR GLEITSCHIENE UND ELEKTRISCHE GLEITSCHIENE FÜR EINE FAHRZEUGSITZFRONT
MÉCANISME DE RÉGLAGE HORIZONTAL POUR RAIL DE COULISSEMENT ET RAIL COULISSANT ÉLECTRIQUE AVANT DE SIÈGE D'AUTOMOBILE

(30) Priority: 05.08.2022 CN 202222053834 U
(43) Date of publication of application: 09.04.2025
(73) Proprietor: Keiper (Changshu) Seating Mechanisms Co., Ltd., Suzhou, Jiangsu 215500 (CN); KEIPER Seating Mechanisms Co., Ltd., Pudong Shanghai 201315 (CN)
(72) Inventor: LI, Jia, Shanghai 201315 (CN); WANG, Chuan, Shanghai 201315 (CN); CUI, Yuanbo, Shanghai 201315 (CN); NI, Hongbin, Shanghai 201315 (CN)
(74) Representative: Santarelli
(86) International application number: PCT/CN2023/107666
(87) International publication number: WO 2024/027488

(56) References cited:
- CN-A- 113 060 056
- CN-U- 216 709 085
- CN-U- 216 709 085
- CN-U- 217 705 557
- DE-U1- 202006 012 434
- JP-A- 2007 290 516
- JP-A- 2020 183 208
- JP-A- 2020 183 208
- JP-A- H11 129 790
- JP-U- H0 484 045
- US-A- 5 342 013

## Description

### Technical Field

The invention relates to a slide rail mechanism of an automobile seat, and in particular to a horizontal transmission assembly of a slide rail, and a front electric slide rail of an automobile seat.

### Background of the Invention

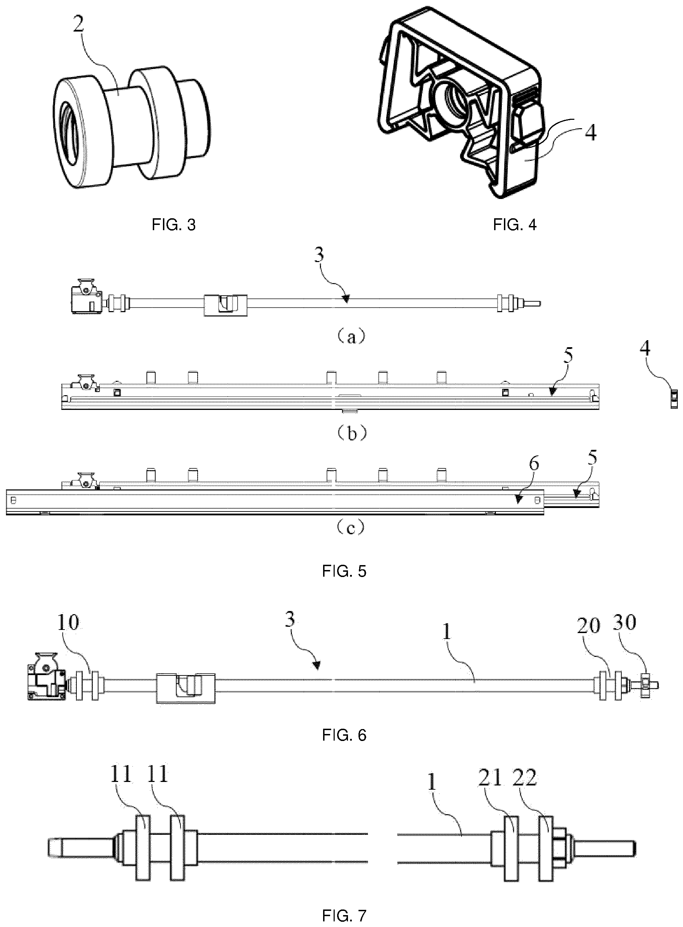

CN 113060056 A (publication number) discloses a high-strength front electric slide rail. In the current high-strength front electric slide rail, pairing with a lower rail is required after a screw rod 1 is connected to an upper rail due to the design limitation. As shown in FIG. 5, the assembling process is as follows: (a) front and rear groups of retainer rings are mounted on a horizontal transmission assembly 3 (HTA); (b) a rear bracket 4 is mounted after the horizontal transmission assembly 3 is assembled on an upper rail assembly; and (c) the upper rail assembly and a lower rail assembly are assembled and connected.

Since there is a potential quality risk in the assembling process and the structure is not conducive to rework because a rear retainer ring 2 in an old state is integrated (as shown in FIG. 3) and the horizontal transmission assembly 3 and the rear retainer ring 2 cannot be separated to be pulled out, the horizontal transmission assembly 3 only can be taken out for rework after a lower rail blocking point is knocked off and the rail is disassembled, so that the working hours are prolonged, and unnecessary broken parts are easy to produce.

In addition, the rear bracket 4 in the prior art adopts a casing design (as shown in FIG. 4), and is sleeved into the screw rod 1 and then moves to a fixed position during assembling. This assembling mode is relatively complex, and the cost of each part is high.

CN 216 709 085 U shows another example of a horizontal transmission assembly of the prior art.

### Summary of the Invention

In view of the shortcomings in the prior art, the invention provides a novel horizontal transmission assembly, and a front electric slide rail of an automobile seat. A retainer ring assembly at a rear end of a screw rod is changed into a split type design. When rework is required, a single retainer ring on a rear side can be disassembled, so that it is convenient to take out the HTA structure for rework. The specific solution is a horizontal transmission assembly comprising the technical features set forth in claim 1.

Further, a first split type retainer ring assembly is mounted at a front end of the screw rod.

Further, a pair of first retainer rings of the first split type retainer ring assembly located at the front end of the screw rod and the screw rod are riveted and fixed; and
in a pair of retainer rings of a second split type retainer ring assembly at the rear end of the screw rod, a front retainer ring close to the first split type retainer ring assembly and the screw rod are riveted and fixed, and a rear retainer ring and the screw rod are in threaded fit with each other and are fixed by a thread adhesive.

Further, the convex rings are arranged on end faces of each pair of retainer rings away from each other.

Further, an axial section of the convex ring of the rear retainer ring is polygonal.

Further, each of the retainer rings has the same outer diameter of 20-25 mm.

Further, the opening of the elastic clamping groove is shaped like a slim waist with an upward opening, elastic clamping pins extending upward are arranged on two sides of the top of the elastic clamping groove, and a minimum distance between the elastic clamping pins is less than a diameter of the screw rod.

The invention has the following advantages:
1) The retainer ring assembly at the rear end of the screw rod includes two mutually independent retainer rings. If there is a problem in the assembling of the slide rail, the rear retainer ring can be disassembled, so that the HTA structure can be taken out conveniently for rework, the working hours are saved, and the rework efficiency is improved.
2) Except for the rear retainer ring of the rear retainer ring assembly, the other retainer rings are fixedly connected to the screw rod through a pressing rivet. In addition, each pair of retainer rings are provided with convex rings extending in opposite directions, so that the stability of connection with the screw rod is enhanced, and the locking strength is improved.
3) The rear retainer ring of the rear retainer ring assembly is provided with an outer hexagon, thereby facilitating mounting and dismounting.
4) The rear end of the screw rod is fixed by the semi-open rear bracket, and the rear bracket has the elastic clamping groove with half opening. Compared with the traditional casing type rear bracket, the rear bracket is simpler to assemble, and the single-piece cost of the semi-open rear bracket is reduced.

### Brief Description of the Drawings

To explain the technical solutions in the embodiments of the invention more clearly, the accompanying drawings required for describing the embodiments or the prior art will be briefly introduced. Apparently, the accompanying drawings in the following description show only some embodiments of the invention, and other drawings can be derived from these drawings by those of ordinary skill in the art without any creative efforts.

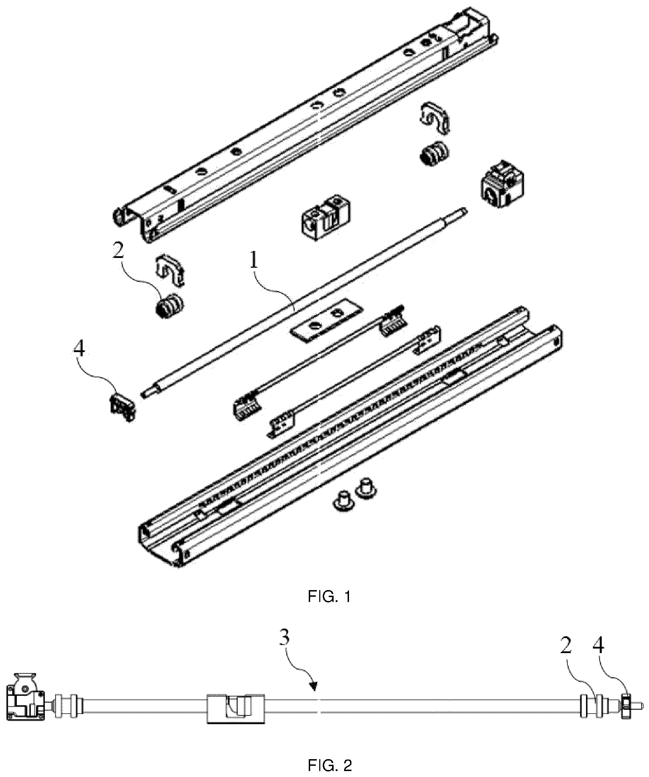

FIG. 1 is an assembling explosive view of a high-strength front electric slide rail provided in the prior art;
FIG. 2 is a schematic diagram of an HTA structure with front and rear retainer rings and a rear bracket assembled in the prior art;
FIG. 3 is a schematic diagram of an integrated single retainer ring assembly in the prior art;
FIG. 4 is a schematic diagram of a rear bracket in the prior art;
FIG. 5 is a flowchart of assembling an HTA structure on upper and lower rail assemblies in the prior art;
FIG. 6 is a schematic diagram of an HTA structure with a split type retainer ring assembly and a semi-open rear bracket assembled according to the invention;
FIG. 7 is a partial structural diagram of FIG. 6;
FIG. 8 is a schematic diagram of a pair of split type retainer rings of a first split type retainer ring assembly located at a front end of a screw rod;
FIG. 9 is a schematic diagram of a semi-open rear bracket;
FIG. 10 is a three-dimensional diagram of a rear retainer ring with an outer hexagon convex ring structure; and
FIG. 11 is an assembling flow chart of the invention.

### Detailed Description of Embodiments

In the following description, numerous specific details are given to provide a more thorough understanding of the invention. However, it will be apparent to those skilled in the art that the invention may be implemented without one or more of these details. In other examples, to avoid confusion with the invention, some technical features well known in the art are not described.

To thoroughly understand the invention, detailed steps and detailed structures will be put forward in the following description so as to explain the technical solutions of the invention. Preferred embodiments of the invention are described in detail below; however, in addition to these detailed descriptions, the invention may have other embodiments.

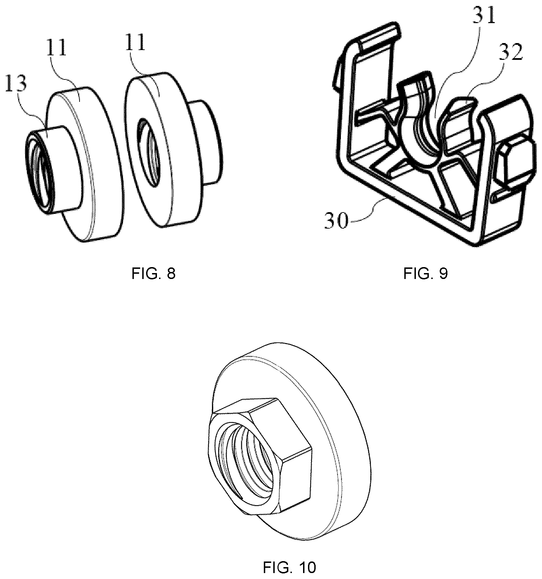

Referring to FIG. 6 to FIG. 7, the invention provides a horizontal transmission assembly of a slide rail. The horizontal transmission assembly 3 is mounted in an upper rail assembly 5 and a lower rail assembly 6 of the slide rail; the horizontal transmission assembly 3 is provided with a screw rod 1; and a split type retainer ring assembly 10, a split type retainer ring assembly 20 and a semi-open rear bracket 30 are respectively mounted at front and rear ends of the screw rod 1. Each split type retainer ring assembly 10 and 20 includes a pair of mutually independent retainer rings; a convex ring extending axially is arranged on at least one end face of each of the retainer rings; the semi-open rear bracket 30 is provided with an elastic clamping groove 31 with a radial opening (as shown in FIG. 9); and the rear end of the screw rod 1 is pressed and clamped in the elastic clamping groove 31 from the radial opening.

Compared with the prior art in which front and rear retainer rings are all integrated, the invention adopts the rear retainer assembly including a pair of mutually independent retainer rings, having the advantages that when there is a quality problem in the assembling and rework is required, the horizontal transmission assembly 3 can be taken out from the upper and lower rail assemblies for rework by removing the retainer ring at the back of the rear retainer ring assembly. In addition, compared with the prior art in which a casing type rear bracket is adopted, the invention adopts the semi-open rear bracket 30 with a half opening, it is only necessary to press the screw rod 1 into the elastic clamping groove 31 to complete fixation during assembling of the rear bracket, thereby facilitating separation from the screw rod 1 and taking out the horizontal transmission assembly 3 conveniently for rework.

In an optional embodiment, a pair of first retainer rings 11 of a first split type retainer ring assembly 10 located at the front end of the screw rod 1 and the screw rod 1 are in thread fit connection and are riveted and fixed. In a pair of retainer rings of a second split type retainer ring assembly 20 located at the rear end of the screw rod 1, a front retainer ring 21 close to the first split type retainer ring assembly 10 and the screw rod 1 are in thread fit connection and are riveted and fixed, and a rear retainer ring 22 and the screw rod 1 are in thread fit and are fixed by a thread adhesive. In the invention, the rear retainer ring 22 and the screw rod 1 are fixed through adhesion, and the other retainer rings are fixed with the screw rod 1 through pressing rivets, so on one hand, the stability of connection between the retainer rings and the screw rod is ensured, and on the other hand, once the assembling problem of the slide rail assembly occurs, the rear retainer ring 22 can be taken out separately and conveniently, and then the horizontal transmission assembly 3 is taken out for rework.

According to the invention, the convex rings are arranged on end faces, away from each other, of the pair of retainer rings of the first split type retainer ring assembly 10 and the second split type retainer ring assembly 20. As shown in FIG. 8, taking the first split type retainer ring assembly 10 as an example, convex rings 13 are arranged on opposite end faces of two retainer rings 11. Compared with the existing retainer ring assembly provided with the convex ring at only one end in FIG. 3, the invention has higher locking strength and lower cost. To facilitate the mounting and dismounting of the rear retainer ring 22, the convex ring of the rear retainer ring 22 is set as an outer hexagon structure (as shown in FIG. 10).

In an optional embodiment, each retainer ring has the same outer diameter of 20-25 mm, and the diameter is increased compared with the existing retainer ring, so that the strength of the retainer ring is improved without affecting sliding, and the locking strength is improved.

As shown in FIG. 9, the opening of the elastic clamping groove 31 is shaped like a slim waist with an upward opening, elastic clamping pins 32 extending upward are arranged on two sides of the top of the elastic clamping groove 31, and a minimum distance between the elastic clamping pins is less than the diameter of the screw rod 1, so that it is convenient for the screw rod 1 to clamp in and pull out, and the horizontal transmission assembly 3 can be taken out more conveniently.

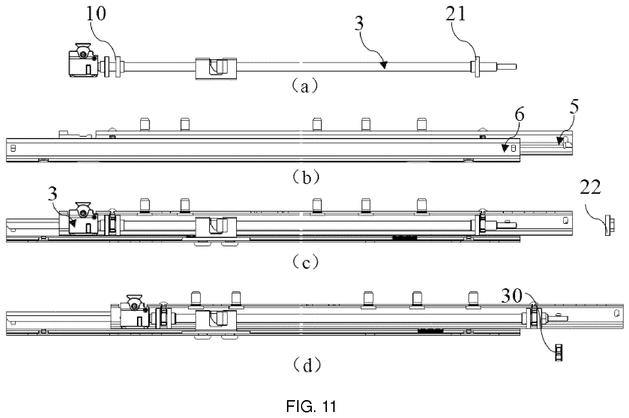

As shown in FIG. 11, the assembling process of the invention is as follows:
(a) The pair of retainer rings 11 of the first split type retainer ring assembly 10 and the front retainer ring 21 of the second split type retainer ring assembly 20 are connected to the screw rod 1 through pressing rivets, and a gearbox assembly and a nut bracket assembly are assembled on the screw rod 1 to form the horizontal transmission assembly 3.
(b) The upper rail assembly 5 and the lower rail assembly 6 are assembled together to form an upper and lower rail assembly.
(c) The horizontal transmission assembly 3 passes through the upper and lower rail assembly, and the rear retainer ring 22 is fixed at the rear end of the screw rod 1 through adhesion.
(d) The semi-open rear bracket 30 is mounted, and it is ensured that the rear end of the screw rod 1 is clamped into the elastic clamping groove 31 of the semi-open rear bracket 30.

It should be noted that the step (a) and the step (b) in FIG. 11 are in no order.

The preferred embodiments of the invention are described above. It should be understood that the invention is not limited to the above specific embodiments, and devices and structures that are not described in detail should be understood to be implemented in a common manner in the art; any person skilled in the art can make many possible variations and modifications to the technical solutions of the invention, or modify them to be equivalent examples of the variations, without departing from the scope of the invention which is defined by the appended claims.

## Claims

1. A horizontal transmission assembly for a slide rail, wherein the horizontal transmission assembly (3) is adapted to be arranged in an upper rail assembly (5) and a lower rail assembly (6) of the slide rail; the horizontal transmission assembly (3) is provided with a screw rod (1); a split type retainer ring assembly and a semi-open rear bracket (30) which are mounted at a rear end of the screw rod (1);
the split type retainer ring assembly comprises a pair of mutually independent retainer rings, and a convex ring (13) extending axially is arranged on at least one end face of each of the retainer rings; and
the semi-open rear bracket (30) is provided with an elastic clamping groove (31) with a radial opening, and the rear end of the screw rod (1) is pressed and clamped in the elastic clamping groove (31) from the radial opening.

2. The horizontal transmission assembly according to claim 1, wherein a first split type retainer ring assembly (10) is mounted at a front end of the screw rod (1).

3. The horizontal transmission assembly according to claim 2, wherein a pair of first retainer rings (11) of the first split type retainer ring assembly (10) located at the front end of the screw rod (1) and the screw rod (1) are riveted and fixed; and
in a pair of retainer rings of a second split type retainer ring assembly (20) which is the split type retainer ring assembly at the rear end of the screw rod (1), a front retainer ring (21) close to the first split type retainer ring assembly (10) and the screw rod (1) are riveted and fixed, and a rear retainer ring (22) and the screw rod (1) are fixed by a thread adhesive.

4. The horizontal transmission assembly according to claim 3, wherein the convex rings (13) are arranged on end faces of each pair of retainer rings away from each other.

5. The horizontal transmission assembly according to claim 4, wherein an axial section of the convex ring (13) of the rear retainer ring (22) is polygonal.

6. The horizontal transmission assembly according to claim 2, wherein each of the retainer rings has the same outer diameter of 20-25 mm.

7. The horizontal transmission assembly according to claim 1, wherein the opening of the elastic clamping groove (31) is shaped like a slim waist with an upward opening, elastic clamping pins (32) extending upward are arranged on two sides of the top of the elastic clamping groove (31), and a minimum distance between the elastic clamping pins (32) is less than a diameter of the screw rod (1).

8. A front electric slide rail of an automobile seat based on the horizontal transmission assembly according to any one of claims 1 to 7.

## Patentansprüche

1. Horizontale Getriebeanordnung für eine Gleitschiene, wobei die horizontale Getriebeanordnung (3) angepasst ist, um in einer oberen Schienenanordnung (5) und einer unteren Schienenanordnung (6) der Gleitschiene angeordnet zu sein; die horizontale Getriebeanordnung (3) mit einer Schraubenstange (1); einer geteilten Halteringanordnung und einer halboffenen hinteren Halterung (30), die an einem hinteren Ende der Schraubenstange (1) montiert sind, bereitgestellt ist:
die geteilte Halteringanordnung ein Paar voneinander unabhängiger Halteringe umfasst, und ein sich axial erstreckender konvexer Ring (13) an mindestens einer Stirnfläche jedes der Halteringe angeordnet ist; und
die halboffene hintere Halterung (30) mit einer elastischen Klemmnut (31) mit einer radialen Öffnung bereitgestellt ist, und das hintere Ende der Schraubenstange (1) von der radialen Öffnung in die elastische Klemmnut (31) gedrückt und geklemmt wird.

2. Horizontale Getriebeanordnung nach Anspruch 1, wobei eine erste geteilte Halteringanordnung (10) an einem vorderen Ende der Schraubenstange (1) montiert ist.

3. Horizontale Getriebeanordnung nach Anspruch 2, wobei ein Paar erster Halteringe (11) der ersten geteilten Halteringanordnung (10), die sich am vorderen Ende der Schraubenstange (1) und der Schraubenstange (1) befinden, vernietet und befestigt sind; und
in einem Paar Halteringe einer zweiten geteilten Halteringanordnung (20), welche die geteilte Halteringanordnung an dem hinteren Ende der Schraubenstange (1) ist, ein vorderer Haltering (21) in der Nähe der ersten geteilten Halteringanordnung (10) und die Schraubenstange (1) vernietet und befestigt sind, und ein hinterer Haltering (22) und die Schraubenstange (1) mit einem Gewindestopper befestigt sind.

4. Horizontale Getriebeanordnung nach Anspruch 3, wobei die konvexen Ringe (13) an Stirnflächen jedes Halteringepaares voneinander entfernt angeordnet sind.

5. Horizontale Getriebeanordnung nach Anspruch 4, wobei ein axialer Abschnitt des konvexen Ringes (13) des hinteren Halterings (22) polygonal ist.

6. Horizontale Getriebeanordnung nach Anspruch 2, wobei jeder der Halteringe den gleichen Außendurchmesser von 20-25 mm aufweist.

7. Horizontale Getriebeanordnung nach Anspruch 1, wobei die Öffnung der elastischen Klemmnut (31) als schmaler Bund mit einer nach oben gerichteten Öffnung geformt ist, wobei an zwei Seiten der Oberseite der elastischen Klemmnut (31) sich nach oben erstreckende elastische Klemmstifte (32) angeordnet sind und ein Mindestabstand zwischen den elastischen Klemmstiften (32) kleiner als ein Durchmesser der Schraubenstange (1) ist.

8. Vordere elektrische Gleitschiene eines Automobilsitzes basierend auf der horizontalen Getriebeanordnung nach einem der Ansprüche 1 bis 7.

## Revendications

1. Ensemble de transmission horizontale pour une glissière, dans lequel l'ensemble de transmission horizontale (3) est adapté pour être agencé dans un ensemble supérieur de glissière (5) et un ensemble inférieur de glissière (6) de la glissière ; l'ensemble de transmission horizontale (3) est pourvu d'une tige filetée (1) ; un ensemble de bagues de retenue de type fendu et un support arrière semi-ouvert (30) qui sont montés à une extrémité arrière de la tige filetée (1) :
l'ensemble de bagues de retenue de type fendu comporte une paire de bagues de retenue indépendantes les unes des autres, et une bague convexe (13) s'étendant axialement est agencée sur au moins une face d'extrémité de chacune des bagues de retenue ; et
le support arrière semi-ouvert (30) est pourvu d'une rainure de serrage élastique (31) avec une ouverture radiale, et l'extrémité arrière de la tige filetée (1) est pressée et serrée dans la rainure de serrage élastique (31) à partir de l'ouverture radiale.

2. Ensemble de transmission horizontale selon la revendication 1, dans lequel un premier ensemble de bagues de retenue de type fendu (10) est monté à une extrémité avant de la tige filetée (1).

3. Ensemble de transmission horizontale selon la revendication 2, dans lequel une paire de premières bagues de retenue (11) du premier ensemble de bagues de retenue de type fendu (10) situées à l'extrémité avant de la tige filetée (1) et la tige filetée (1) sont rivetées et fixées ; et
dans une paire de bagues de retenue d'un deuxième ensemble de bagues de retenue de type fendu (20) qui est l'ensemble de bagues de retenue de type fendu à l'extrémité arrière de la tige filetée (1), une bague de retenue avant (21) proche du premier ensemble de bagues de retenue de type fendu (10) et la tige filetée (1) sont rivetées et fixées, et une bague de retenue arrière (22) et la tige filetée (1) sont fixées par un adhésif pour filetage.

4. Ensemble de transmission horizontale selon la revendication 3, dans lequel les bagues convexes (13) sont agencées sur des faces d'extrémité de chaque paire de bagues de retenue éloignées l'une de l'autre.

5. Ensemble de transmission horizontale selon la revendication 4, dans lequel une section axiale de la bague convexe (13) de la bague de retenue arrière (22) est polygonale.

6. Ensemble de transmission horizontale selon la revendication 2, dans lequel chacune des bagues de retenue présente le même diamètre extérieur de 20-25 mm.

7. Ensemble de transmission horizontale selon la revendication 1, dans lequel l'ouverture de la rainure de serrage élastique (31) est en forme de taille fine avec une ouverture vers le haut, des goupilles de serrage élastiques (32) s'étendant vers le haut sont agencées sur deux côtés du haut de la rainure de serrage élastique (31), et une distance minimale entre les goupilles de serrage élastiques (32) est inférieure à un diamètre de la tige filetée (1).

8. Glissière électrique avant d'un siège automobile sur la base de l'ensemble de transmission horizontale selon l'une quelconque des revendications 1 à 7.
